# EUROPEAN PATENT SPECIFICATION

(11) **EP 2 704 514 B1**
(45) Date of publication and mention of the grant of the patent: **16.10.2019**
(21) Application number: 12777544.3
(22) Date of filing: 22.03.2012
(51) Int. Cl.: H04W 84/20

(54) **METHODS FOR PERSONAL-NETWORK MERGING AND SPLITTING**
VERFAHREN ZUR ZUSAMMENFÜHRUNG UND TEILUNG PERSÖNLICHER NETZWERKE
PROCÉDÉS POUR FUSIONNER ET DIVISER DES RÉSEAUX PERSONNELS

(30) Priority: 25.04.2011 CN 201110103957
(43) Date of publication of application: 05.03.2014
(73) Proprietor: ZTE Corporation, Shenzhen, Guangdong 518057 (CN)
(72) Inventor: YAO, Lizhe, Shenzhen, Guangdong 518057 (CN); CHEN, Jun, Shenzhen, Guangdong 518057 (CN); SHANG, Guoqiang, Shenzhen, Guangdong 518057 (CN)
(74) Representative: Ahner, Philippe
(86) International application number: PCT/CN2012/072845
(87) International publication number: WO 2012/146103

(56) References cited:
- EP-A1- 1 833 197
- CN-A- 101 051 924
- CN-A- 101 184 087
- CN-A- 101 945 494
- US-A1- 2009 043 876
- US-A1- 2009 285 126
- US-A1- 2010 150 122
- US-A1- 2011 093 704

## Description

### TECHNICAL FIELD

The disclosure relates to network merging and splitting techniques, and in particular to a method and apparatus for personal-network merging and splitting.

### BACKGROUND

With the development of science and techniques, people possess more and more personal devices, such as a mobile phone, a laptop, a PDA, an MP3, an MP4 and so on, with increasing capabilities; and most of the devices are capable of short-range communication; therefore there is an increasing desire for these devices around people to be connected together into a personal area network (PN) to share a resource and a capability of each other.

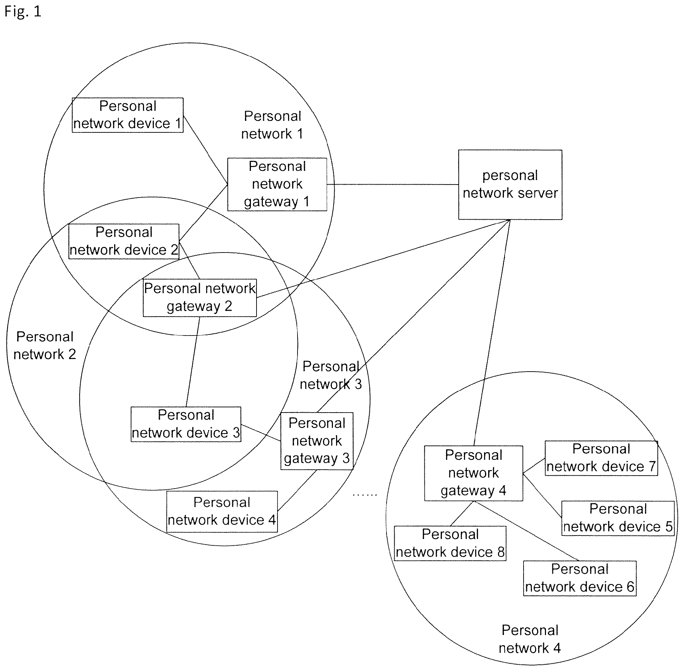

Fig. 1 shows a schematic diagram of networking among various devices in a PN including personal network devices, personal network gateways, and a personal network server, a networking relationship thereamong being that: a personal network 1 consists of a personal network gateway 1, a personal network device 1 and a personal network device 2; a personal network 2 consists of a personal network gateway 2, the personal network device 2 and a personal network device 3; a personal network 3 consists of a personal network gateway 3, the personal network device 3 and a personal network device 4; a personal network 4 consists of a personal network gateway 4, a personal network device 5, a personal network device 6, a personal network device 7 and a personal network device 8. Each personal network is connected to the personal network server through the personal network gateway of the personal network; and in Fig. 1, the personal network device 2 belongs to both the personal network 1 and the personal network 2, and the personal network device 3 belongs to both the personal network 2 and the personal network 3.

However, as such PNs continue to increase in number, how to manage these PNs effectively, and in particular, how to merge and split multiple personal networks in a PN, has become an imperative problem. There is no effective solution yet regarding the problem of merging and splitting of multiple personal networks at present.

US 2009/0043876 A1 discloses a method for managing devices in a user network and a user network management entity which handles combining and splitting operations in the user network more efficiently. The management entity of the user network obtains the information about the location of the managed PANs and/or stand-alone devices, and, based on the location information, checks existence of any PAN and/or stand-alone device that can be combined or split. If any such device exists, the management entity performs the combining or splitting operation according to the combining or splitting mode preset or selected by the user. In the process of combining or splitting a PAN or stand-alone device, the user can reserve the network registration information of some relevant devices as required, update the network registration information of other devices directly, and switch the service access points to ensure continuity of network services.

EP 1833 197 A1 discloses invention which comprises a step of constructing a plurality of groups using a plurality of wireless nodes during construction of a network; a step of provisionally deciding, from among the wireless nodes in each group, a group master node serving as a group master that communicates with the other nodes in the group and that functions as a communication relay station for communicating with the other groups, with the other nodes in the group serving as slave nodes that are connected under the control of the group master node to perform their respective terminal station operation; a step in which the wireless nodes in each group exchange data with each other at a commencement session and calculate the minimum required transmission power for each other; a step in which the wireless nodes in each group use the calculated minimum required transmission powers to communicate with each other; and a step of, when determining that the time of changing the group master has come, causing one of the slave nodes to take over the group master.

According to US 2009/0285126 A1, a system and method organize a network of communicating objects in at least one partition comprising a plurality of communication cells respectively covered by a plurality of leader nodes, the network having a set of allocatable addresses split into a plurality of address pools distributively managed by the leader nodes. Upon a new node arrival, phase (a) and possibly phase (b) are executed. During phase (a), if the new node detects a leader node, it allocates address from its managed address pool and the new node assumes a member node roll in the leader node cell. If the new node does not detect any leader node in its vicinity, it goes on to the phase (b), wherein, if the new node detects a first cell member node, it assumes the role ofleader covering a second cell, obtains an available pool of managed addresses and is allocated one of the obtained addresses.

### SUMMARY

In view of the above, the main purpose of the embodiments in the present disclosure is to provide methods for personal-network merging and splitting capable of effectively solving the problem of personal area network (PN) merging and splitting and in particular merging and splitting of multiple personal networks in a PN when there are a large number of PNs.

The features of the methods according to the present disclosure are defined in the independent claims, and the preferable features according to the present invention are defined in the dependent claims.

The merging solution in the embodiments of the present disclosure mainly includes that: a personal-network merging is triggered by a user, a server, a service, a personal network device, a personal network gateway, or a particular event; a new personal network gateway is selected for a merged personal network from all members of two or more personal networks before the merging; a personal network device is enrolled in the merged personal network; and the merged personal network is registered on a personal network server. The splitting solution in the embodiments of the present disclosure mainly includes that: a personal-network splitting is triggered by a user, a server, a service, a personal network device, a personal network gateway, or a particular event; a new personal network gateway is selected for a personal network after the splitting from all members of a personal network before the splitting; and personal network devices are enrolled in personal networks after the splitting, respectively. With the embodiments of the present disclosure, the problem of merging and splitting of multiple personal networks is solved effectively.

### BRIEF DESCRIPTION OF THE DRAWINGS

Fig. 1 is a schematic diagram of networking among various devices in a PN in an existing technique;
Fig. 2 is a flow chart of the basic principle of a method for personal-network merging of an embodiment in the present disclosure;
Fig. 3 is a flow chart of the basic principle of a method for personal-network splitting of an embodiment in the present disclosure;
Fig. 4 is a schematic diagram of the networking of an embodiment 1 in the present disclosure;
Fig. 5 is a schematic diagram of the networking of an embodiment 2 in the present disclosure; and
Fig. 6 is a schematic diagram of the networking of an embodiment 3 in the present disclosure.

### DETAILED DESCRIPTION

According to various embodiments of the present disclosure, a merging solution mainly includes that: a user, a server, a service, a personal network device, a personal network gateway, or a particular event triggers a personal-network merging; a new personal network gateway is selected for a merged personal network from all members of two or more personal networks before the merging; a personal network device is enrolled in the merged personal network; and the merged personal network is registered on a personal network server; and a splitting solution mainly includes that: a user, a server, a service, a personal network device, a personal network gateway, or a particular event triggers a personal-network splitting; a new personal network gateway is selected for a personal network after the splitting from all members of a personal network before the splitting; and personal network devices are enrolled in personal networks after the splitting, respectively.

The implementation of the technical solutions will be further elaborated below with reference to the accompanying drawings.

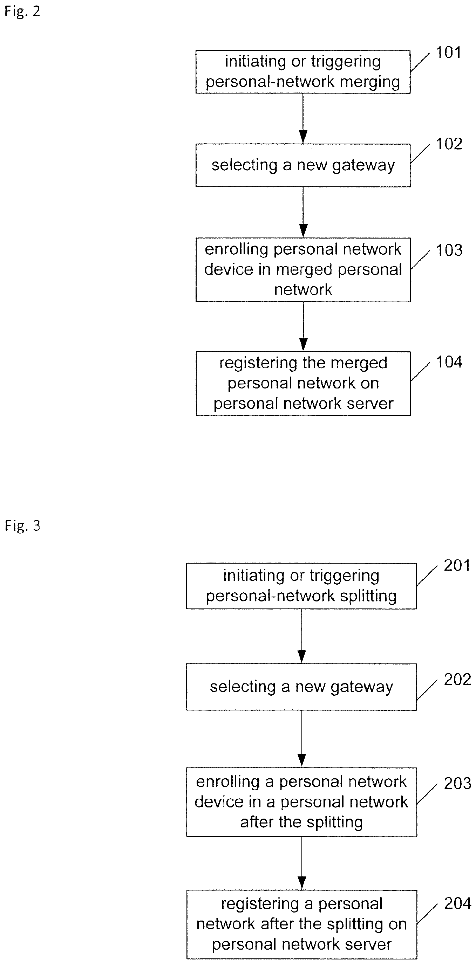

A method for personal-network merging, a flow of the basic principle of which being as shown in Fig. 2, mainly includes the following steps:
Step 101, a personal-network merging may be initiated or triggered by a user, a server, a service, a personal network device, a personal network gateway, or a certain particular event. In the case of the merging, the "particular event" includes that the user enters a particular area, for example, a house, a car, a hotel and so on, which will not be elaborated here.

Here, the merging may be merging of two personal networks into one new personal network, or merging of multiple personal networks into one new personal network. A personal network gateway or a personal network device in a personal network that is triggered to initiate the merging sends a personal-network-merging request to a respective personal network gateway of another personal network to invite the another personal network to merge; the respective personal network gateway that receives the personal-network-merging request returns to the personal network gateway or the personal network device that initiates the invitation a response indicating whether the another personal network agrees to merge. When the merging is initiated by the user or the server, then by default each of the members agrees to merge. Here, the members refer to all devices in the two or more personal networks to be merged.

Step 102, a new personal network gateway is selected for a merged personal network.

Here, selecting the new personal network gateway for the merged personal network mainly includes that:
A1, first, the new personal network gateway of the merged personal network may be selected from personal network gateways of the two or more personal networks before the merging, or from all members of the two or more personal networks before the merging. Selection from all the members means selection of the new personal network gateway from both the personal network gateways and personal network devices.
B1, secondly, the new personal network gateway of the merged personal network may be selected by the user, the server, the service, or another third party (such as a CP or an SP).
C1, next, there may be multiple standards for selecting the new personal network gateway of the merged personal network, for example, selecting randomly, selecting according to a device capability, selecting according to a service type and so on. Here, regarding the device capability, both the personal network device and the personal network gateway are logical entities, which may exist in a specific physical device (such as a mobile phone), therefore the device capability mentioned herein refers to a capability of a physical device in which such a logical entity is located, which will be not elaborated here.

Step 103, a personal device is enrolled in the merged personal network.

Here, enrolling the personal device in the merged personal network mainly includes that:
A2, when the new personal network gateway after the merging and the personal network device belong to a same personal network before the merging, and the new personal network gateway is also the personal network gateway of the same personal network before the merging, then the personal network device already belongs to the merged personal network and is spared from being re-enrolled in the merged personal network.
B2, when the new personal network gateway after the merging and the personal network device don't belong to a same personal network before the merging, then the personal network device needs to send the new personal network gateway after the merging a request for being enrolled in the merged personal network.

Here, there are two cases when the personal network device sends the new personal network gateway after the merging a request for being enrolled in the merged personal network: in the first case, if there is an established link between the new personal network gateway after the merging and the personal network device, then the personal network device requests to be enrolled in the merged personal network directly; in the second case, if no link is established between the new personal network gateway after the merging and the personal network device, then a link needs to be established between the new personal network gateway after the merging and the personal network device before the personal network device requests to be enrolled in the merged personal network.

C2, if a personal network gateway of a personal network before the merging is selected as the new personal network gateway of the merged personal network, then the personal network gateway before the merging may continue to exist as the personal network gateway after the merging; otherwise the personal network gateway before the merging may be enrolled in the merged personal network as a personal network device (in which case the personal network gateway before the merging is required to switch to a personal network device mode), or leave the merged personal network directly.

Step 104, the merged personal network is registered on a personal network server.

Here, registering the merged personal network on the personal network server mainly includes that: the new personal network gateway after the merging registers the merged personal network on the personal network server; and the personal network server stores information on the merged personal network.

With an apparatus for personal-network merging, one solution is that the apparatus is located in a personal network gateway, the other is that the apparatus is located in a personal network server; both solutions are described below, respectively.

An apparatus for personal-network merging is located in a personal network gateway, the apparatus including a merging triggering unit, a gateway selecting unit, a post-merging enrolling unit. Wherein, the merging triggering unit is configured to trigger a personal-network merging by a user, a server, a service, a personal network device, a personal network gateway, or a particular event. The gateway selecting unit is configured to select a new personal network gateway for a merged personal network from all members of two or more personal networks before the merging. The post-merging enrolling unit is configured to enrol a personal network device in the merged personal network.

Here, the apparatus also includes a merging responding unit configured to, when the personal-network merging is triggered, cause a personal network gateway or a personal network device in a personal network that is triggered to initiate the merging to send a personal-network-merging request to a respective personal network gateway of another personal network to invite the another personal network to merge, and cause the respective personal network gateway that receives the personal-network-merging request to return to the personal network gateway or the personal network device that initiates the invitation a response indicating whether the another personal network agrees to merge, wherein when the triggering of the personal-network merging is initiated by the user or the server, then by default each device to be involved in the merging agrees to merge.

Here, the post-merging enrolling unit is also configured as such: when the new personal network gateway after the merging and the personal network device belong to a same personal network before the merging, and the new personal network gateway is also the personal network gateway of the same personal network before the merging, then the personal network device already belongs to the merged personal network and is spared from being re-enrolled in the merged personal network; when the new personal network gateway after the merging and the personal network device don't belong to a same personal network before the merging, then the personal network device needs to send the new personal network gateway after the merging a request for being enrolled in the merged personal network.

An apparatus for personal-network merging is located in a personal network server, the apparatus including a merging triggering unit, a gateway selecting unit, a post-merging enrolling unit, and a first registering unit. Wherein, the merging triggering unit is configured to trigger a personal-network merging by a user, a server, a service, a personal network device, a personal network gateway, or a particular event. The gateway selecting unit is configured to select a new personal network gateway for a merged personal network from all members of two or more personal networks before the merging. The post-merging enrolling unit is configured to enrol a personal network device in the merged personal network. The first registering unit is configured to register the merged personal network on the personal network server.

A method for personal-network splitting, a flow of the basic principle of which being as shown in Fig. 3, mainly includes the following steps:
Step 201, a personal-network splitting may be initiated or triggered by a user, a server, a service, a personal network device, a personal network gateway, or a certain particular event. In the case of the splitting, the "particular event" includes that the user leaves a particular area, for example, a house, a car, a hotel and so on, which will not be elaborated here.

Here, the splitting may be splitting of one personal network into two new personal networks, or splitting of one personal network into multiple new personal networks. The personal network gateway or a personal network device in the personal network that is triggered to initiate the splitting sends a personal network splitting request to another respective selected personal network gateway of a personal network after the splitting; the another respective selected personal network gateway that receives the personal network splitting request returns to the personal network gateway or the personal network device that initiates the splitting request a response indicating whether to agree to split. When the splitting is initiated by the user or the server, then by default each of the members agrees to split. Here, the members refer to all devices in one personal network to be split.

Step 202, a new personal network gateway is selected for each personal network after the splitting.

Here, selecting the new personal network gateway for each personal network after the splitting mainly includes that:
A3, first, a new personal network gateway of a personal network after the splitting may be selected from all members of the personal network before the splitting, in other words, a new personal network gateway of a personal network after the splitting may be selected from both the personal network gateway before the splitting and personal network devices before the splitting.
B3, secondly, a new personal network gateway of a personal network after the splitting may be selected by the user, the server, the service, or another third party.
C3, next, there may be multiple standards for selecting a new personal network gateway of a personal network after the splitting, for example, selecting randomly, selecting according to a device capability, selecting according to a service type and so on.
D3, if a device (a personal network gateway or a personal network device) selected as a new personal network gateway of a personal network after the splitting, is currently not in a personal network gateway state, then the device selected as a new personal network gateway of a personal network after the splitting is required to switch to a personal network gateway mode.

Step 203, personal network devices are enrolled in personal networks after the splitting, respectively.

Here, enrolling a personal devices in a personal network after the splitting mainly includes that:
A4, when the personal network device to be enrolled in the personal network after the splitting and the new personal network gateway of the personal network after the splitting belong to the same personal network before the splitting, and the new personal network gateway after the splitting is also the personal network gateway of the personal network before the splitting, then the personal network device already belongs to the personal network after the splitting and is spared from being re-enrolled in the personal network after the splitting.
B4, when the personal network device to be enrolled in the personal network after the splitting and the new personal network gateway of the personal network after the splitting don't belong to a same personal network before the splitting, then the personal network device needs to send the new personal network gateway after the splitting a request for being enrolled in the personal network after the splitting.

Here, there are two cases when a personal network device sends a new personal network gateway of a personal network after the splitting a request for being enrolled in the personal network after the splitting: in the first case, if there is an established link between the personal network device and the new personal network gateway after the splitting, then the personal network device requests to be enrolled in the personal network after the splitting directly; in the second case, if no link is established between the personal network device and the new personal network gateway after the splitting, then a link needs to be established between the personal network device and the new personal network gateway after the splitting before the personal network device requests to be enrolled in the personal network after the splitting.

Step 204, the personal networks after the splitting are registered on a personal network server.

Here, registering each of the personal networks after the splitting on the personal network server mainly includes that: a new personal network gateway of a personal network after the splitting registers the personal network after the splitting on the personal network server; and the personal network server stores information on the personal network after the splitting.

It should be noted that for either merging or splitting, a state before the personal-network merging or splitting may be remembered so that the previous state may be referenced at the time of a next merging or splitting. The state may be stored on the personal network server or a personal network gateway. The state includes a device currently included in a personal network as well as a current state (for example, on-line, off-line, or busy state, and a service in use) of such a device.

With an apparatus for personal-network splitting, one solution is that the apparatus is located in a personal network gateway, the other is that the apparatus is located in a personal network server; both solutions are described below, respectively.

An apparatus for personal-network splitting is located in a personal network gateway, the apparatus including a splitting triggering unit, a gateway selecting unit, and a post-splitting enrolling unit. Wherein, the splitting triggering unit is configured to trigger a personal-network splitting by a user, a server, a service, a personal network device, a personal network gateway, or a particular event. The gateway selecting unit is configured to select a new personal network gateway for a personal network after the splitting, including selecting the new personal network gateway after the splitting from all members of a personal network before the splitting. The post-splitting enrolling unit is configured to enrol personal network devices in personal networks after the splitting, respectively.

Here, the apparatus also includes a splitting responding unit configured to, when the personal-network splitting is triggered, cause the personal network gateway or a personal network device in the personal network that is triggered to initiate the splitting to send a personal network splitting request to another respective selected personal network gateway of a personal network after the splitting, and cause the another respective selected personal network gateway that receives the personal network splitting request to return to the personal network gateway or the personal network device that initiates the splitting request a response indicating whether to agree to split, wherein when the triggering of the personal-network splitting is initiated by the user or the server, then by default each device to be involved in the splitting agrees to split.

An apparatus for personal-network splitting is located in a personal network server, the apparatus including a splitting triggering unit, a gateway selecting unit, a post-splitting enrolling unit, and a second registering unit. Wherein, the splitting triggering unit is configured to trigger a personal-network splitting by a user, a server, a service, a personal network device, a personal network gateway, or a particular event. The gateway selecting unit is configured to select a new personal network gateway for a personal network after the splitting, including selecting the new personal network gateway after the splitting from all members of a personal network before the splitting. The post-splitting enrolling unit is configured to enrol personal network devices in personal networks after the splitting, respectively. The second registering unit is configured to register the personal networks after the splitting on the personal network server.

Here, the second registering unit is further configured for registering, by a new personal network gateway of a personal network after the splitting, the personal network after the splitting on the personal network server; and for storing, by the personal network server, information on the personal network after the splitting.

Embodiments of the present disclosure are elaborated as follows.

A specific embodiment 1:
User A has two personal networks simultaneously, namely a personal network 1 supporting a video service and a personal network 2 supporting a voice service, respectively.

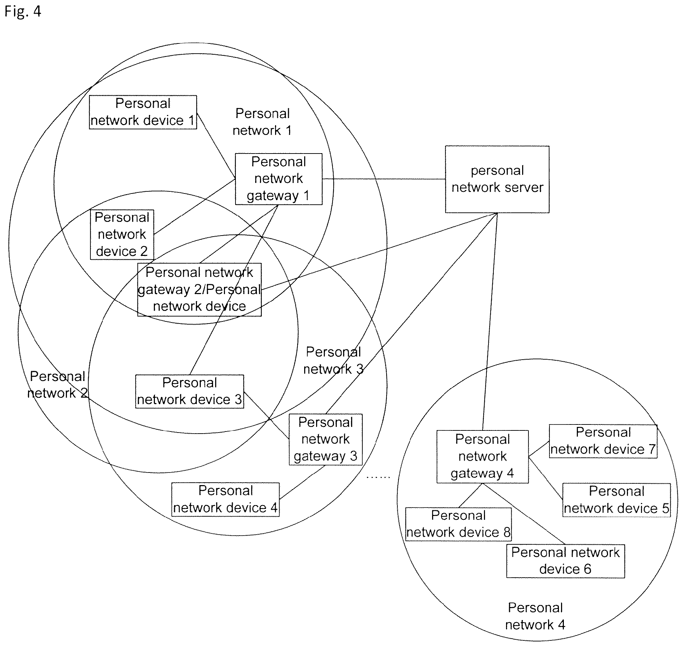

The user A wishes to merge personal networks 1, 2 into one personal network to support a video call service; a schematic diagram of the networking is as shown in Fig. 4, and the flow includes:
b1, use A initiates a merging of the two personal networks into one new personal network. A triggered personal network gateway 1 sends a personal-network-merging request to a personal network gateway 2 of personal network 2 that is invited to merge; the personal network gateway 2 returns a response to the personal network gateway 1 to agree to merge.
b2, a new personal network gateway is selected for the merged personal network; the user A selects the personal network gateway 1 (supporting a 3G network) as the new personal network gateway after the merging according to a capability of each device in the two personal networks.
b3, a personal network device is enrolled in the merged personal network.

Here, a personal network device 1, a personal network device 2 and the personal network gateway 1 after the merging belong to the same personal network 1 before the merging, and the personal network gateway 1 is also the personal network gateway of the personal network 1 before the merging, therefore the personal network device 1 and the personal network device 2 already belong to the merged personal network and are spared from being re-enrolled in the merged personal network. However, a personal network device 3 needs to send the personal network gateway 1 after the merging a request for being enrolled in the merged personal network. The specific process is that: the personal network device 3 and the personal network gateway 1 first discover each other and establish a link with each other; the personal network device 3 sends the personal network gateway 1 a request for being enrolled in the merged personal network.

The personal network gateway 2 is converted into a personal network device and sends the personal network gateway 1 a request for being enrolled in the merged personal network.

b4, the merged personal network is registered on the personal network server.

Here, the personal network gateway 1 registers the merged personal network on the personal network server, and the personal network server stores information on the merged personal network.

A specific embodiment 2:
User A has a personal network 1, user B has a personal network 2, and user C has a personal network 3.

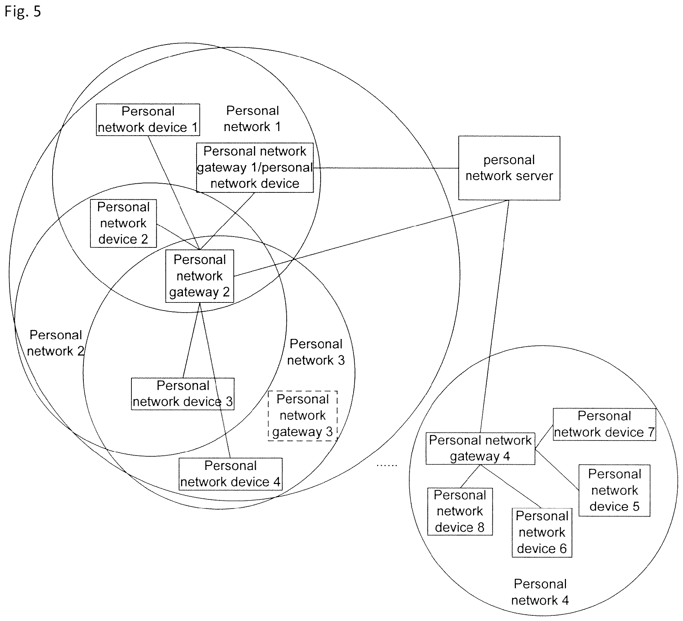

The users A, B and C get together and wish to merge their personal networks into one new personal network to share content; a schematic diagram of the networking is as shown in Fig. 5, and the flow includes:
c1, use A initiates the merging of the three personal networks into one new personal network. A triggered personal network gateway 1 sends a personal-network-merging request to a personal network gateway 2 and a personal network gateway 3 that are invited to merge; personal network gateway 2 returns a response to the personal network gateway 1 to agree to merge; and personal network gateway 3 returns a response to the personal network gateway 1 to agree to merge.
c2, a new personal network gateway is selected for the merged personal network; a personal network server randomly selects the personal network gateway 2 as the new personal network gateway of the merged personal network.
c3, a personal network device is enrolled in the merged personal network.

Here, a personal network device 2, a personal network device 3 and the personal network gateway 2 after the merging belong to the same personal network 2 before the merging, and the personal network gateway 2 is also the personal network gateway of the personal network 2 before the merging, therefore the personal network device 2 and the personal network device 3 already belong to the merged personal network and are spared from being re-enrolled in the merged personal network.

Meanwhile, a personal network device 1 and a personal network device 4 need to send the personal network gateway 2 after the merging a request for being enrolled in the merged personal network. The specific process is that: the personal network device 1, the personal network device 4 and the personal network gateway 2 first discover each other and establish a link with each other; the personal network device 1 and the personal network device 4 send the personal network gateway 2 a request for being enrolled in the merged personal network, respectively.

The personal network gateway 1 is converted into a personal network device and sends the personal network gateway 2 a request for being enrolled in the merged personal network.

A personal network gateway 3 leaves the merged personal network.

c4, the merged personal network is registered on the personal network server.

Here, the personal network gateway 2 registers the merged personal network on the personal network server, and the personal network server stores information on the merged personal network.

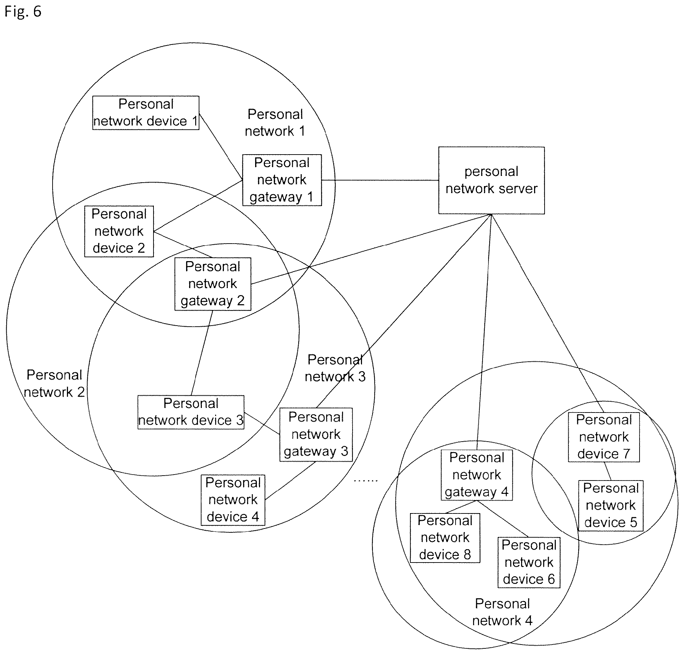

A specific embodiment 3:
There is a personal network 4 in a user A's house, personal network 4 including a personal network gateway 4, a personal network device 5, a personal network device 6, a personal network device 7 and a personal network device 8. The user A wishes to split the personal network into two different personal networks, one being left at home and the other is carried out with user A; a schematic diagram of the networking is as shown in Fig. 6, and the flow includes:
d1, use A initiates a, splitting of the personal network 4 into two different personal networks, namely one personal network formed by personal network gateway 4, personal network device 6, and personal network device 8, with the personal network gateway 4 as a new personal network gateway; and the other personal network formed by personal network device 7 and personal network device 5, with personal network device 7 as a new personal network gateway, respectively.
d2, a new personal network gateway is selected for each of the two personal networks after the splitting.

Here, the specific process of selecting the new personal network gateways is that: the user A selects the personal network gateway 4 and the personal network device 7 as the new personal network gateways after the splitting; the triggered personal network gateway 4 sends a personal network splitting request to the new personal network gateway (the personal network device 7) of one of the personal networks after the splitting, the personal network device 7 returns a response to the personal network gateway 4 to indicate whether to agree to split; if the personal network device 7 is currently not in a personal network gateway state, then the state of personal network device 7 is switched to a personal network gateway mode.

d3, a personal network device is enrolled in a personal network after the splitting.

Here, the specific process of enrolment is that: the personal network device 6, the personal network device 8 and the personal network gateway 4 after the splitting belong to the same personal network before the splitting, and the personal network gateway 4 is also the personal network gateway of the personal network before the splitting, then the personal network device 6 and the personal network device 8 already belong to a personal network after the splitting and are spared from being re-enrolled in the personal network after the splitting; However, the personal network device 5 needs to send a new personal network gateway (the personal network device 7) of a personal network after the splitting a request for being enrolled in the personal network after the splitting.

Here, the specific process of enrolment is that: the personal network device 6, the personal network device 8 and the personal network gateway 4 after the splitting belong to the same personal network before the splitting, and the personal network gateway 4 is also the personal network gateway of the personal network before the splitting, then the personal network device 6 and the personal network device 8 already belong to a personal network after the splitting and are spared from being re-enrolled in the personal network after the splitting; However, the personal network device 5 needs to send a new personal network gateway (the personal network device 7) of a personal network after the splitting a request for being enrolled in the personal network after the splitting.

Here, the specific process that the personal network device 5 sends the new personal network gateway (the personal network device 7) of a personal network after the splitting a request for being enrolled in the personal network after the splitting is that: the personal network device 5 and the new personal network gateway (the personal network device 7) establish a link with each other; the personal network device 5 sends the new personal network gateway (the personal network device 7) a request for being enrolled in the personal network after the splitting.

d4, each of the personal networks after the splitting is registered on the personal network server.

Here, the personal network gateway 4 and the personal network device 7 (now being a new personal network gateway) register the personal networks after the splitting on the personal network server, and the personal network server stores information on the personal networks after the splitting.

## Claims

1. A method for personal-network merging, each personal network comprising a personal network gateway, and being connected to a personal network server through the personal network gateway of the each personal network, the method comprising:
merging a personal network and at least another personal network into a merged personal network, the merging being triggered by a user and sending, by a personal network gateway in the personal network that is triggered to initiate the merging, a personal-network-merging request to a personal network gateway of the another personal network to invite the another personal network to merge;
returning, by the personal network gateway that receives the personal-network-merging request, to the personal network gateway that initiates the invitation, a response indicating whether the another personal network agrees to merge;
when the another personal network agrees to merge,
enrolling, by a new personal network gateway of the merged personal network, a personal network device in the merged personal network (103);
registering, by the new personal network gateway, the merged personal network on the personal network server (104);
storing, on the personal network server, a state before the merging, comprising a device currently comprised in a personal network and a current state of the device, the current state comprising at least one of an on-line state, an off-line state, a busy state, and a service in use,
wherein the new personal network gateway of the merged personal network is selected from all members of two or more personal networks before the merging according to its device capability.

2. The method according to claim 1, wherein the new personal network gateway is selected from personal network gateways of the two or more personal networks before the merging.

3. The method according to claim 1, wherein in the enrolling, by the new personal network gateway, the personal network device in the merged personal network,
when the new personal network gateway after the merging and the personal network device belong to a same personal network before the merging, and the new personal network gateway is also the personal network gateway of the same personal network before the merging, then the personal network device already belongs to the merged personal network and is spared from being re-enrolled in the merged personal network; or
when the new personal network gateway after the merging and the personal network device don't belong to a same personal network before the merging, then the personal network device needs to send the new personal network gateway after the merging a request for being enrolled in the merged personal network.

4. The method according to claim 1, wherein the registering, by the new personal network gateway, the merged personal network on the personal network server comprises:
registering, by the new personal network gateway after the merging, the merged personal network on the personal network server; and storing, by the personal network server, information on the merged personal network.

5. A method for personal-network splitting, each personal network comprising a personal network gateway, and being connected to a personal network server through the personal network gateway of the each personal network, the method comprising:
splitting a personal network into at least two new personal networks, the split being triggered by a user and sending, by a personal network gateway in the personal network that is triggered to initiate the splitting, a personal network splitting request to another respective selected personal network gateway of a personal network after the splitting;
returning, by the another respective selected personal network gateway that receives the personal network splitting request, to the personal network gateway that initiates the splitting request, a response indicating whether to agree to split;
enrolling, by a new personal network gateway of the personal network after the splitting, a personal network device in the personal network after the splitting (203), respectively; and
registering, by the new personal network gateway, the personal network after the splitting on the personal network server (204) ;
storing, on the personal network server, a state before the splitting, comprising a device currently comprised in the personal network and a current state of the device, the current state comprising at least one of an on-line state, an off-line state, a busy state, and a service in use,
wherein the new personal network gateway of the personal network after the splitting is selected from all members of the personal network before the splitting according to its device capability.

6. The method according to claim 5, wherein in the enrolling, by the new personal network gateway, the personal network device in the personal network after the splitting, respectively,
when a personal network device to be enrolled in a personal network after the splitting and the new personal network gateway of the personal network after the splitting belong to a same personal network before the splitting, and the new personal network gateway is also the personal network gateway of the personal network before the splitting, then the personal network device already belongs to the personal network after the splitting and is spared from being re-enrolled in the personal network after the splitting; or
when a personal network device to be enrolled in a personal network after the splitting and the new personal network gateway of the personal network after the splitting don't belong to a same personal network before the splitting, then the personal network device needs to send the new personal network gateway after the splitting a request for being enrolled in the personal network after the splitting.

7. The method according to claim 5, wherein the registering, by the new personal network gateway, the personal network after the splitting on the personal network server comprises:
registering, by a new personal network gateway of a personal network after the splitting, the personal network after the splitting on the personal network server; and storing, by the personal network server, information on the personal network after the splitting.

## Patentansprüche

1. Verfahren zum Vereinigen von persönlichen Netzwerken, wobei jedes persönliche Netzwerk eine persönliches Netzwerk-Schnittstelle umfasst und durch die persönliches Netzwerk-Schnittstelle von jedem persönlichen Netzwerk mit einem persönliches Netzwerk-Server verbunden ist, wobei das Verfahren umfasst:
Vereinigen eines persönlichen Netzwerks und mindestens eines weiteren persönlichen Netzwerks zu einem vereinigten persönlichen Netzwerk, wobei das Vereinigen durch einen Nutzer ausgelöst wird, und Senden, durch eine persönliches Netzwerk-Schnittstelle in dem persönlichen Netzwerk, das zum Initiieren des Vereinigens ausgelöst wird, einer persönliches Netzwerk-Vereinigungsanfrage zu einer persönliches Netzwerk-Schnittstelle des weiteren persönlichen Netzwerks zum Einladen des weiteren persönlichen Netzwerks zum Vereinigen;
Zurückgeben, durch die persönliches Netzwerk-Schnittstelle, welche die persönliches Netzwerk-Vereinigungsanfrage empfängt, zu der persönliches Netzwerk-Schnittstelle, welche die Einladung initiiert, einer Antwort, die angibt, ob das weitere persönliche Netzwerk einer Vereinigung zustimmt;
wenn das weitere persönliche Netzwerk der Vereinigung zustimmt, Anmelden, durch eine neue persönliches Netzwerk-Schnittstelle des vereinigten persönlichen Netzwerks, einer persönliches Netzwerk-Vorrichtung in dem vereinigten persönlichen Netzwerk (103);
Registrieren, durch die neue persönliches Netzwerk-Schnittstelle, des vereinigten persönlichen Netzwerks an dem persönliches Netzwerk-Server (104);
Speichern, auf dem persönliches Netzwerk-Server, eines Zustands vor dem Vereinigen, umfassend eine Vorrichtung, die gegenwärtig in einem persönlichen Netzwerk enthalten ist, und eines gegenwärtigen Zustands der Vorrichtung, wobei der gegenwärtige Zustand mindestens einen von einem Online-Zustand, einem Off-line-Zustand, einem Besetzt-Zustand und einem Dienst in Verwendung umfasst,
wobei die neue persönliches Netzwerk-Schnittstelle des vereinigten persönlichen Netzwerks aus allen Elementen von zwei oder mehr persönlichen Netzwerken vor dem Vereinigen gemäß dessen Vorrichtungsleistungsvermögen ausgewählt wird.

2. Verfahren nach Anspruch 1, bei dem die neue persönliches Netzwerk-Schnittstelle aus persönliches Netzwerk-Schnittstellen von den zwei oder mehr persönlichen Netzwerken vor dem Vereinigen ausgewählt ist.

3. Verfahren nach Anspruch 1, bei dem beim Anmelden durch die neue persönliches Netzwerk-Schnittstelle die persönliche Netzwerk-Vorrichtung in dem vereinigten persönlichen Netzwerk,
wenn die neue persönliches Netzwerk-Schnittstelle nach dem Vereinigen und die persönliches Netzwerk-Vorrichtung zu demselben persönlichen Netzwerk vor dem Vereinigen gehören, und die neue persönliches Netzwerk-Schnittstelle auch die persönliche Netzwerk-Schnittstelle desselben persönlichen Netzwerks vor dem Vereinigen ist, dann die persönliches Netzwerk-Vorrichtung bereits zu dem vereinigten persönlichen Netzwerk gehört und von einem erneuten Anmelden in dem vereinigten persönlichen Netzwerk ausgenommen wird; oder
wenn die neue persönliches Netzwerk-Schnittstelle nach dem Vereinigen und die persönliches Netzwerk-Vorrichtung nicht zu demselben persönlichen Netzwerk vor dem Vereinigen gehören, dann die persönliches Netzwerk-Vorrichtung verlangt, dass die neue persönliches Netzwerk-Schnittstelle nach dem Vereinigen eine Anfrage sendet, in dem vereinigten persönlichen Netzwerk angemeldet zu werden.

4. Verfahren nach Anspruch 1, bei dem das Registrieren, durch die neue persönliches Netzwerk-Schnittstelle, des vereinigten persönlichen Netzwerks an dem persönliches Netzwerk-Server umfasst:
Registrieren, durch die neue persönliches Netzwerk-Schnittstelle nach dem Vereinigen, des vereinigten persönlichen Netzwerks an dem persönliches Netzwerk-Server; und Speichern, durch den persönliches Netzwerk-Server, von Informationen über das vereinigte persönliche Netzwerk.

5. Verfahren zum Aufteilen von persönlichen Netzwerken, wobei jedes persönliche Netzwerk eine persönliches Netzwerk-Schnittstelle umfasst und durch die persönliches Netzwerk-Schnittstelle von jedem persönlichen Netzwerk mit einem persönliches Netzwerk-Server verbunden ist, wobei das Verfahren umfasst:
Aufteilen eines persönlichen Netzwerks in mindestens zwei neue persönliche Netzwerke, wobei das Aufteilen durch einen Nutzer ausgelöst wird, und Senden, durch eine persönliches Netzwerk-Schnittstelle in dem persönlichen Netzwerk, das zum Initiieren des Aufteilens ausgelöst wird, einer persönliches Netzwerk-Aufteilungsanfrage zu einer weiteren jeweiligen ausgewählten persönliches Netzwerk-Schnittstelle eines persönlichen Netzwerks nach dem Aufteilen;
Zurückgeben, durch die weitere jeweilige ausgewählte persönliches Netzwerk-Schnittstelle, welche die persönliches Netzwerk-Aufteilungsanfrage empfängt, zu der persönliches Netzwerk-Schnittstelle, welche die Aufteilungsanfrage initiiert, einer Antwort, die angibt, ob der Aufteilung zugestimmt wird;
jeweils Anmelden, durch eine neue persönliches Netzwerk-Schnittstelle des persönlichen Netzwerks nach dem Aufteilen, einer persönliches Netzwerk-Vorrichtung in dem persönlichen Netzwerk nach dem Aufteilen (203); und
Registrieren, durch die neue persönliches Netzwerk-Schnittstelle, des persönlichen Netzwerks nach dem Aufteilen an dem persönliches Netzwerk-Server (204);
Speichern, auf dem persönliches Netzwerk-Server, eines Zustands vor dem Aufteilen, umfassend eine Vorrichtung, die gegenwärtig in dem persönlichen Netzwerk enthalten ist, und eines gegenwärtigen Zustands der Vorrichtung, wobei der gegenwärtige Zustand mindestens einen von einem Online-Zustand, einem Off-line-Zustand, einem Besetzt-Zustand und einem Dienst in Verwendung umfasst,
wobei die neue persönliches Netzwerk-Schnittstelle des persönlichen Netzwerks nach dem Aufteilen aus allen Elementen des persönlichen Netzwerks vor dem Aufteilen gemäß dessen Vorrichtungsleistungsvermögen ausgewählt wird.

6. Verfahren nach Anspruch 5, bei dem beim jeweiligen Anmelden durch die neues persönliches Netzwerk-Schnittstelle die persönliches Netzwerk-Vorrichtung in dem persönlichen Netzwerk nach dem Aufteilen,
wenn eine persönliches Netzwerk-Vorrichtung, die in einem persönlichen Netzwerk nach dem Aufteilen angemeldet werden soll und die neues persönliches Netzwerk-Schnittstelle des persönlichen Netzwerks nach dem Aufteilen zu demselben persönlichen Netzwerk vor dem Aufteilen gehören, und die neues persönliches Netzwerk-Schnittstelle auch die persönliches Netzwerk-Schnittstelle des persönlichen Netzwerks vor dem Aufteilen ist, dann die persönliches Netzwerk-Vorrichtung bereits zu dem persönlichen Netzwerk nach dem Aufteilen gehört und von dem erneuten Anmelden in dem persönlichen Netzwerk nach dem Aufteilen ausgenommen wird; oder
wenn eine persönliches Netzwerk-Vorrichtung, die in einem persönlichen Netzwerk nach dem Aufteilen angemeldet werden soll und die neues persönliches Netzwerk-Schnittstelle des persönlichen Netzwerks nach dem Aufteilen nicht zu demselben persönlichen Netzwerk vor dem Aufteilen gehört, dann die persönliches Netzwerk-Vorrichtung verlangt, dass die neues persönliches Netzwerk-Schnittstelle nach dem Aufteilen eine Anfrage sendet, in dem persönlichen Netzwerk nach dem Aufteilen angemeldet zu werden.

7. Verfahren nach Anspruch 5, bei dem das Registrieren, durch die neues persönliches Netzwerk-Schnittstelle, des persönlichen Netzwerks nach dem Aufteilen an dem persönliches Netzwerk-Server umfasst:
Registrieren, durch eine neue persönliches Netzwerk-Schnittstelle eines persönlichen Netzwerks nach dem Aufteilen, des persönlichen Netzwerks nach dem Aufteilen an dem persönliches Netzwerk-Server; und Speichern, durch den persönliches Netzwerk-Server, von Informationen über das persönliche Netzwerk nach dem Aufteilen.

## Revendications

1. Procédé de fusion de réseaux personnels, chaque réseau personnel comprenant une passerelle de réseau personnel, et étant connecté à un serveur de réseau personnel par le biais de la passerelle de réseau personnel de chaque réseau personnel, le procédé comprenant :
fusionner un réseau personnel et au moins un autre réseau personnel en un réseau personnel fusionné, la fusion étant déclenchée par un utilisateur et, envoyer par une passerelle de réseau personnel dans le réseau personnel qui est déclenché pour lancer la fusion, d'une demande de fusion de réseau personnel à une passerelle de réseau personnel de l'autre réseau personnel pour inviter l'autre réseau personnel à fusionner ;
renvoyer, par la passerelle de réseau personnel qui reçoit la demande de fusion de réseau personnel, à la passerelle de réseau personnel qui lance l'invitation, d'une réponse indiquant si l'autre réseau personnel accepte de fusionner ;
lorsque l'autre réseau personnel accepte de fusionner,
inscrire, par une nouvelle passerelle de réseau personnel du réseau personnel fusionné, d'un dispositif de réseau personnel dans le réseau personnel fusionné (103) ;
l'enregistrement, par la nouvelle passerelle de réseau personnel, du réseau personnel fusionné sur le serveur de réseau personnel (104) ;
stocker, sur le serveur de réseau personnel, un état avant la fusion, comprenant un dispositif actuellement compris dans un réseau personnel et un état actuel du dispositif, l'état actuel comprenant au moins l'un d'un état en ligne, d'un état hors ligne, d'un état occupé, et d'un service en utilisation,
dans lequel la nouvelle passerelle de réseau personnel du réseau personnel fusionné est choisie parmi tous les membres de deux réseaux personnels ou plus avant la fusion selon sa capacité de dispositif.

2. Procédé selon la revendication 1, dans lequel la nouvelle passerelle de réseau personnel est choisie parmi des passerelles de réseau personnel des deux réseaux personnels ou plus avant la fusion.

3. Procédé selon la revendication 1, dans lequel lors de l'inscription, par la nouvelle passerelle de réseau personnel, du dispositif de réseau personnel dans le réseau personnel fusionné,
lorsque la nouvelle passerelle de réseau personnel après la fusion et le dispositif de réseau personnel appartiennent à un même réseau personnel avant la fusion, et la nouvelle passerelle de réseau personnel est également la passerelle de réseau personnel du même réseau personnel avant la fusion, alors le dispositif de réseau personnel appartient déjà au réseau personnel fusionné et une réinscription dans le réseau personnel fusionné lui est épargnée ; ou
lorsque la nouvelle passerelle de réseau personnel après la fusion et le dispositif de réseau personnel n'appartiennent pas à un même réseau personnel avant la fusion, alors le dispositif de réseau personnel doit envoyer à la nouvelle passerelle de réseau personnel après la fusion une demande pour être inscrit dans le réseau personnel fusionné.

4. Procédé selon la revendication 1, dans lequel l'enregistrement, par la nouvelle passerelle de réseau personnel, du réseau personnel fusionné sur le serveur de réseau personnel comprend :
enregistrer, par la nouvelle passerelle de réseau personnel après la fusion, le réseau personnel fusionné sur le serveur de réseau personnel; et stocker, par le serveur de réseau personnel, des informations sur le réseau personnel fusionné.

5. Procédé de division de réseaux personnels, chaque réseau personnel comprenant une passerelle de réseau personnel, et étant connecté à un serveur de réseau personnel par le biais de la passerelle de réseau personnel de chaque réseau personnel, le procédé comprenant :
diviser un réseau personnel en au moins deux nouveaux réseaux personnels, la division étant déclenchée par un utilisateur et l'envoi, par une passerelle de réseau personnel dans le réseau personnel qui est déclenché pour lancer la division, d'une demande de division de réseau personnel à une autre passerelle de réseau personnel sélectionnée respective d'un réseau personnel après la division ;
renvoyer, par l'autre passerelle de réseau personnel sélectionnée respective qui reçoit la demande de division de réseau personnel, à la passerelle de réseau personnel qui lance la demande de division, une réponse indiquant si elle accepte de diviser ;
inscrire, par une nouvelle passerelle de réseau personnel du réseau personnel après la division, un dispositif de réseau personnel dans le réseau personnel après la division (203), respectivement ; et
enregistrer, par la nouvelle passerelle de réseau personnel, le réseau personnel après la division sur le serveur de réseau personnel (204) ;
stocker, sur le serveur de réseau personnel, un état avant la division, comprenant un dispositif actuellement compris dans le réseau personnel et un état actuel du dispositif, l'état actuel comprenant au moins l'un d'un état en ligne, d'un état hors ligne, d'un état occupé, et d'un service en utilisation,
dans lequel la nouvelle passerelle de réseau personnel du réseau personnel après la division est choisie parmi tous les membres du réseau personnel avant la division selon sa capacité de dispositif.

6. Procédé selon la revendication 5, dans lequel lors de l'inscription, par la nouvelle passerelle de réseau personnel, du dispositif de réseau personnel dans le réseau personnel après la division, respectivement,
lorsqu'un dispositif de réseau personnel à inscrire dans un réseau personnel après la division et la nouvelle passerelle de réseau personnel du réseau personnel après la division appartiennent à un même réseau personnel avant la division, et la nouvelle passerelle de réseau personnel est également la passerelle de réseau personnel du réseau personnel avant la division, alors le dispositif de réseau personnel appartient déjà au réseau personnel après la division et une réinscription dans le réseau personnel après la division lui est épargnée ; ou
lorsqu'un dispositif de réseau personnel à inscrire dans un réseau personnel après la division et la nouvelle passerelle de réseau personnel du réseau personnel après la division n'appartiennent pas à un même réseau personnel avant la division, alors le dispositif de réseau personnel doit envoyer à la nouvelle passerelle de réseau personnel après la division une demande pour être inscrit dans le réseau personnel après la division.

7. Procédé selon la revendication 5, dans lequel l'enregistrement, par la nouvelle passerelle de réseau personnel, du réseau personnel après la division sur le serveur de réseau personnel comprend :
enregistrer, par une nouvelle passerelle de réseau personnel d'un réseau personnel après la division, le réseau personnel après la division sur le serveur de réseau personnel ; et stocker, par le serveur de réseau personnel, des informations sur le réseau personnel après la division.
